# EUROPEAN PATENT APPLICATION

(11) **EP 1 936 844 A2**
(43) Date of publication of application: **25.06.2008**
(21) Application number: 07118112.7
(22) Date of filing: 09.10.2007
(51) Int. Cl.: H04H 60/18

(54) **Reservation recording method and apparatus for a broadcast receiver**

(30) Priority: 23.12.2006 KR 20060133247
(71) Applicant: Samsung Electronics Co., Ltd., Yeongtong-gu Suwon-si, Gyeonggi-do (KR)
(72) Inventor: Han, Kum-yon, Gyeonggi-do (KR)
(74) Representative: Clark, Charles Robert

(57) **Abstract**

A method and an apparatus for reservation recording in a digital broadcast receiver are provided. The apparatus includes an input unit which receives first time information and channel information for reservation recording; a tuner unit which tunes a reservation recording channel corresponding to the channel information; and a controller which compares the second time information provided from the reservation recording channel with the first time information and controls recording of a broadcast signal received based on a time difference between the first time information and the second time information. Accordingly, the apparatus may correctly record an entire amount of a desired reservation-recorded broadcast program in consideration of different time information from broadcast station to broadcast station and can record a desired broadcast program even when a broadcast station modifies a broadcast schedule of programs.

## Description

Apparatuses and methods consistent with the present invention relate to reservation recording in a broadcast receiver. More particularly, but not exclusively, to reservation recording in a digital broadcast receiver, which is capable of preventing a reservation recording error in a digital broadcast receiving apparatus such as a digital television (TV), a set-top box, and the like.

In general, a digital broadcast receiver may function to store received broadcast signals in a storage device, e.g., a hard disk drive (HDD) or a subsidiary storage device (e.g., a compact disk (CD), a DVD, or the like).

In addition to this function, the digital broadcast receiver may have a reservation recording function to store a received broadcast signal at a user-set time for the sake of enhanced convenience of use.

To this end, the digital broadcast receiver generally comprises a key input device or a remote control unit (RCU) for allowing a user to input reservation recording information and various control commands, and a nonvolatile memory such as an electrically erasable programmable read-only memory (EEPROM) capable of storing the reservation recording information.

A typical digital broadcast receiver performs the above-described reservation recording function using the following processes.

A microcomputer configured to control the digital broadcast receiver updates a current time of the digital broadcast receiver using a real time clock (RTC) or a frequency-divided system clock, compares reservation recording time set by a user and stored in a memory, such as an EEPROM, with the updated current time, and performs reservation recording when the current time matches the reservation recording time.

Alternatively, the digital broadcast receiver compares a current time contained in a broadcast signal received via a currently tuned channel with the stored reservation recording time, and performs reservation recording when they match.

In this case, the digital broadcast receiver tunes a reservation recording channel to record a broadcast program when a time provided via a currently viewed channel matches a user-stored reservation recording time.

In the case where the RTC is used for reservation recording, if the user-set reservation recording time is not the same as an actual received time of the digital broadcast signal, the entire broadcast program is not recorded.

In the case where the current time received from a broadcast station is used for reservation recording, it generally differs from broadcast station to broadcast station. Accordingly, when a broadcast program received from an actually tuned broadcast station is not the broadcast program desired for reservation recording, an entire amount of the actual desired broadcast program is not recorded.

For example, when the reservation recording time is set to 12:00 and the time information provided via a currently viewed channel indicates 12:00, the digital broadcast receiver tunes the reservation recording channel to record the program since the two times match. When the time information provided via the reservation recording channel indicates 12:02 or 11:58, a broadcast program broadcast before the desired broadcast program is stored by an amount corresponding to 2 minutes or at least a portion of the desired broadcast program is not stored by an amount corresponding to 2 minutes.

Furthermore, when the user presets the reservation recording information, a broadcast program received on a set reservation recording time is recorded unconditionally. Accordingly, if the broadcast station modifies a broadcast schedule of programs, the desired broadcast program is not recorded.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Accordingly an aspect of the present invention provides a method for reservation recording in a digital broadcast receiver in which only an entire amount of a desired broadcast program can be correctly reservation-recorded in consideration of different time information from broadcast station to broadcast station and a desired broadcast program can be recorded even when a broadcast station modifies a broadcast schedule of programs.

Another aspect of the present invention is to provide an apparatus for reservation recording using the method.

According to another aspect of the present invention a method for reservation recording in a digital broadcast receiver is provided, the method comprising: (a) the setting first time information and channel information for reservation recording; (b) comparing second time information provided from a reservation recording channel corresponding to the channel information with the first time information; and (c) the recording a broadcast program received via the reservation recording channel after a latency time corresponding to a time difference between the first time information and the second time information elapses when the second time information is not the same as the first time information.

Step (b) may comprise (d) the determining whether a reservation recording time arrives, using the first time information and third time information provided from a currently tuned channel; and (e) tuning the reservation recording channel when it is determined that the reservation recording time arrives.

Additionally, the method may further include (f) the setting program information to be reservation-recorded.

The method may further include: (g) when it is determined in step (c) that the second time information is the same as the first time information, determining whether the set program information is the same as program information received via the reservation recording channel; (h) when it is determined that the set program information is not the same as the received program information, searching one that is the same as the set program information among subsequent program information that will be received within a predetermined time from the reservation recording channel; and (i) when the subsequent program information that is the same as the set program information is searched, recording a broadcast program received via the reservation recording channel when the searched subsequent program is initiated using the second time information.

The method may further include (j) determining whether the program information received after the latency time elapses in step (c) is the same as the set program information; (k) when the program information received after the latency time elapses is not the same as the set program information, searching one that is the same as the set program information among subsequent program information that will be received within a predetermined time from the reservation recording channel; and (1) when the subsequent program information that is the same as the set program information is searched, recording a broadcast program received via the reservation recording channel when the searched subsequent program is initiated using the second time information.

The method may further include: (m) when the subsequent program information that is the same as the set program information is not searched, creating a select menu for allowing a user to determine whether a subsequent program is recorded.

The second time information may be a system time table (STT) contained in program and system information protocol (PSIP) provided from the reservation recording channel, and the received program information and subsequent program information may be an event information table (EIT) contained in the PSIP.

The first time information, channel information, and program information to be reservation-recorded may be set an electronic program guide (EPG) containing an EIT of PSIP.

In accordance with another aspect of the present invention, there is provided an apparatus for reservation recording in a digital broadcast receiver, the apparatus comprising: an input unit for receiving first time information and channel information for reservation recording; a tuner unit for tuning a reservation recording channel corresponding to the channel information; and a controller for comparing second time information provided from the reservation recording channel with the first time information, and controlling to record a broadcast signal received via the reservation recording channel after a latency time corresponding to a time difference between the first time information and the second time information elapses.

According to another aspect of the present invention, the apparatus may further include a memory unit for storing the first time information and channel information; a timer unit for counting the latency time and providing it to the control unit; and a clock unit for generating a first clock for indicating a time on the digital broadcast receiver and a second clock for setting the latency time according to the second time information.

The tuner unit may include at least one tuner.

The input unit may receive program information to be reservation-recorded.

According to another aspect of the present invention, when it is determined that the second time information is the same as the first time information, the control unit may determine whether the program information to be reservation-recorded is the same as the program information received from the reservation recording channel.

According to another aspect of the present invention, when the program information to be reservation-recorded is not the same as the program information received from the reservation recording channel, the control unit may search one that is the same as the program information to be reservation-recorded among subsequent program information that will be received within a predetermined time from the reservation recording channel, and record a broadcast program received via the reservation recording channel when the searched subsequent program is initiated using the second time information.

According to another aspect of the present invention, when the program information received after the latency time is not the same as the program information to be reservation-recorded, the control unit may search one that is the same as the program information to be reservation-recorded among subsequent program information that will be received within a predetermined time from the reservation recording channel, and record a broadcast program received via the reservation recording channel when the searched subsequent program is initiated using the second time information.

The apparatus may further include an on screen display (OSD) unit for creating a select menu for allowing a user to determine whether the subsequent program is recorded when the program information to be reservation-recorded is not the same as the subsequent program information.

The received program information and subsequent program information may be an event information table (EIT) contained in program and system information protocol (PSIP).

The second time information may be a system time table (STT) contained in PSIP provided from the reservation recording channel.

The first time information, channel information, and program information to be reservation-recorded may be received based on an electronic program guide (EPG) containing an EIT of PSIP.

Embodiments of the present invention are now described by way of example and taken in conjunction with the accompany drawings of which:
Figure 1 is a flowchart illustrating a method for reservation recording in a digital broadcast receiver according to an exemplary embodiment of the present invention;
Figure 2 is a flowchart illustrating processes of the method for reservation recording in a digital broadcast receiver shown in Figure 1;
Figure 3 is another flowchart illustrating processes of the method for reservation recording in a digital broadcast receiver shown in Figure 1;
Figure 4 illustrates an EPG used in the method for reservation recording in a digital broadcast receiver according to the present invention;
Figure 5 illustrates a process of setting an internal system time in the method for reservation recording in a digital broadcast receiver according to the present invention;
Figure 6 is a flowchart illustrating a method for reservation recording in a digital broadcast receiver according to another exemplary embodiment of the present invention; and
Figure 7 is a schematic block diagram illustrating a reservation recording control unit of a digital broadcast receiver according to an exemplary embodiment of the present invention.

Hereinafter, exemplary embodiments of the present invention will be described in detail with reference to the accompanying drawings.

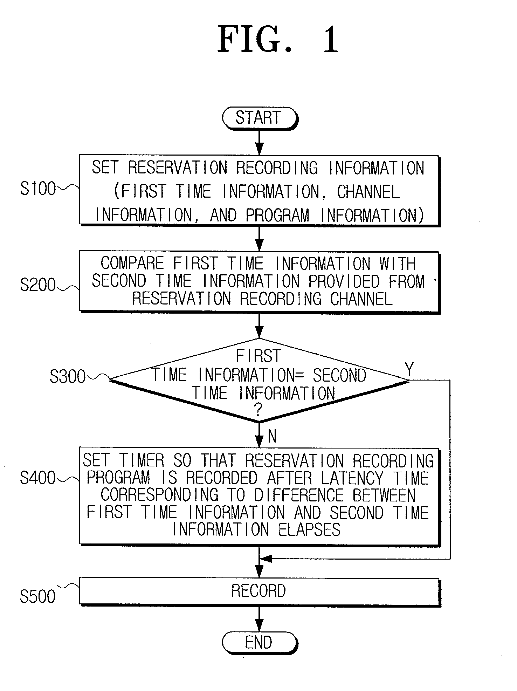

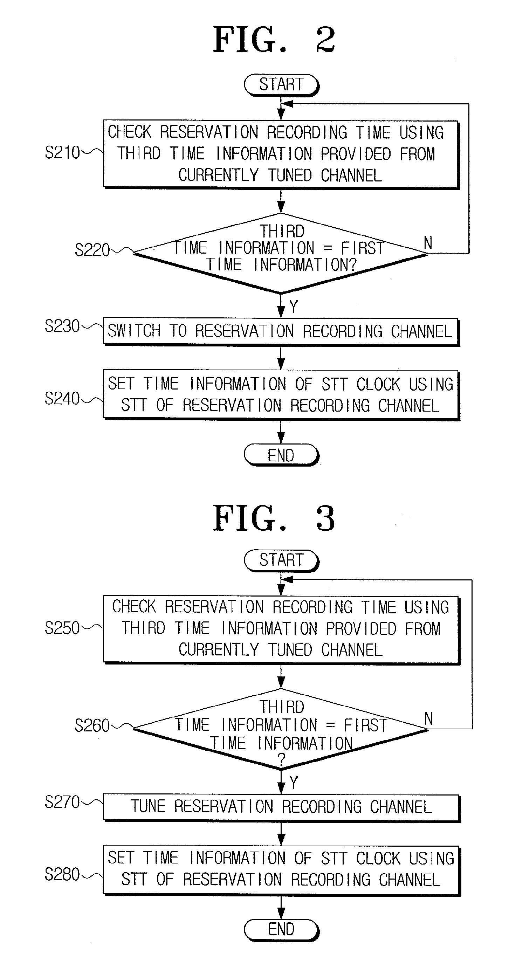

Figure 1 is a flowchart illustrating a method for reservation recording in a digital broadcast receiver according to an exemplary embodiment of the present invention, Figure 2 is a flowchart illustrating processes of the method for reservation recording in a digital broadcast receiver shown in Figure 1, and Figure 3 is another flowchart illustrating processes of the method for reservation recording in a digital broadcast receiver shown in Figure 1.

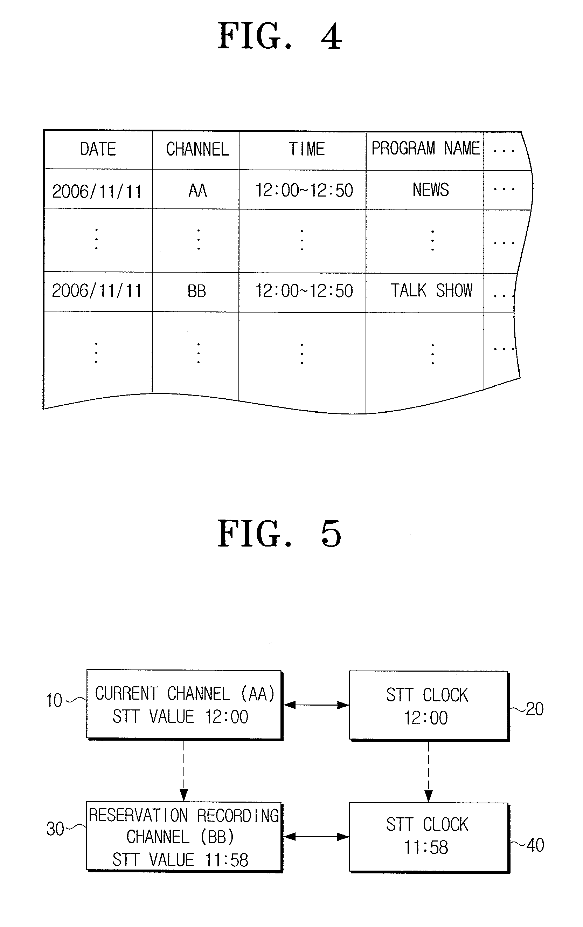

Figure 4 illustrates an EPG used in the method for reservation recording in a digital broadcast receiver according to the present invention, and Figure 5 illustrates a process of setting an internal system time in a method for reservation recording in a digital broadcast receiver according to the present invention

Referring to Figure 1, the method for reservation recording in a digital broadcast receiver according to the present invention includes setting reservation recording information (first time information, channel information, and program information) (S100), comparing the first time information with second time information provided from reservation recording channel (S200), determining whether the first time information is the same as the second time information (S300), setting a timer so that a reservation recording program is recorded after a latency time corresponding to a difference between the first time information and the second time information elapses when the first time information is the same as the second time information (S400), and recording a broadcast program received via the reservation recording channel (S500).

Specifically, in operation S100, the digital broadcast receiver analyzes program and system information protocol (PSIP), creates an electronic program guide (EPG) as shown in Figure 4, and displays it on a display area. The PSIP consists of a virtual channel table (VCT) which lists currently broadcast channels provided from the broadcast station, an event information table (EIT) having linked source IDs for the respective channels in the VCT, a master guide table (MGT) including packet identifier (PID) information to point the EIT, a system time table (STT) including current time information, a rating region table (RRT) including program information, and the like.

The EPG includes a broadcast date (2006/11/11), channel information (AA channel), a program broadcast time (12:00~12:50) and date, a channel, a program name (e.g., news) broadcast on the broadcast time, etc., as shown in Figure 4. In Figure 4, only a portion of the EPG is shown. The EPG may be displayed in various forms and with various contents, e.g., in a banner form on a lower portion of a display area while a video signal is being displayed on the display area.

On the displayed EPG, a user selects reservation recording information, e.g., channel information for setting a reservation recording channel, first time information that is a desired reservation recording time, program information to be reservation-recorded, etc. using a key input unit formed on an outer panel of the digital broadcast receiver or a remote control unit (RCU).

The selected first time information, channel information, and program information are input to the digital broadcast receiver. The digital broadcast receiver stores such reservation recording information so that the selected program on the selected channel is recorded on the selected time, and sets the reservation recording information as its own driving condition.

In operation S200, the digital broadcast receiver compares the second time information provided from the reservation recording channel, i.e., current time information contained in the STT information provided from the broadcast station transmitting the reservation recording channel, with the first time information.

Here, the comparison between the second time information and the first time information may be performed by the following process as illustrated in Figure 2.

Referring to Figure 5, an STT clock 20 of the digital broadcast receiver is set to 12:00 using an STT value 10, which is provided via the current channel (the AA channel of Figure 5) displaying a video on a screen. The STT clock 20 may be set using an STT value which is provided via a channel at a time when power is on.

Comparing the first time information with the second time information (S200) may comprise checking the reservation recording time using the third time information provided from the currently tuned channel (S210), determining whether the third time information is the same as the first time information (S220), switching to the reservation recording channel when it is determined that the third time information is the same as the first time information (S230), and setting time information of the STT clock using the STT of the reservation recording channel (S240).

In operation S210, the digital broadcast receiver tunes a predetermined channel to display a video and compares the third time information provided from the currently tuned channel, i.e., current time information contained in an STT provided from the broadcast station transmitting the currently tuned broadcast channel, with the first time information in a predetermined period to check whether the reservation recording time arrives.

In operation S220, the digital broadcast receiver determines whether the third time information is the same as the first time information.

In operation S230, when it is determined in operation S220 that the third time information is the same as the first time information, the digital broadcast receiver tunes the reservation recording channel to display a video.

In operation S240, the digital broadcast receiver sets the time information of the STT clock using the second time information, i.e., the STT value provided from the reservation recording channel. For example, as shown in Figure 5, when the STT value provided from the reservation recording channel (the BB channel of Figure 4) indicates 11:58, the digital broadcast receiver resets the STT clock 40 to 11:58 using the STT value 30 provided from the reservation recording channel BB.

In Figure 2, the digital broadcast receiver tunes only one channel and displays a video received via the tuned channel. When the digital broadcast receiver is configured to simultaneously tune a plurality of channels, operation S200 may be performed by the following process.

Referring to Figure 3, operation S200 may include checking the reservation recording time using the third time information provided from the currently tuned channel (S250), determining whether the third time information is the same as the first time information (S260), tuning the reservation recording channel when it is determined that the third time information is the same as the first time information (S270), and setting the time information of the STT clock using the STT of the reservation recording channel (S280).

Here, since operations S250 and S260 are substantially the same as operations S210 and S220 shown in Figure 2, a detailed description thereof will be omitted.

In operation S270, the digital broadcast receiver tunes one channel to display a video received via the tuned channel on the display area, and tunes, through another tuner, the reservation recording channel using the channel information contained in the reservation recording information.

In operation S280, the digital broadcast receiver sets the time information of the STT clock using the second time information, i.e., the STT provided from the reservation recording channel. In other words, as shown in Figure 5, when the STT value provided from the reservation recording channel (the BB channel of Figure 4) indicates 11: 58, the STT clock 40 that is the internal clock of the digital broadcast receiver is reset to 11:58 using the STT value 30 provided from the reservation recording channel (BB).

In this case, the digital broadcast receiver assigns a priority to the third time information and the second time information provided from the currently tuned channels, in order to ignore the third time information.

Referring back to Figure 1, a determination is made in operation S300 as to whether the second time information provided from the reservation recording channel, which is stored in operation S200, is the same as the first time information. While, in the above-described example, the STT clock has been synchronized to the second time information and reset, and the determination has been made as to whether the second reset time information is the same as the first time information in operation S200, the combination between the second time information and the first time information may be performed in various ways, including storing the second time information in a predetermined memory such as a nonvolatile memory and comparing it with the first time information.

If it is determined in operation S300 that the first time information is the same as the second time information, the process proceeds to operation S500, where the channel set as the reservation recording channel is recorded. If it is determined in step S300 that the first time information is not the same as the second time information, the process proceeds to step S400.

In operation S400, the channel set as the reservation recording channel is recorded after a predetermined latency time elapses. That is, the timer is set so that the reservation recording channel is recorded in consideration of a time difference between the second time information and the first time information.

For example, in the example shown in Figure 5, since the reservation recording time is set to 12:00 and the STT value from the currently channel AA indicates 12:00, the reservation recording channel BB is tuned, but the STT value of the reservation recording channel BB indicates 11:58. That is, the first time information indicates 12:00 and the second time information indicates 11:58. Accordingly, the timer is set so that the reservation recording channel BB is recorded after the time difference of two minutes elapses.

When it is then determined that a time corresponding to an absolute value of the first time information minus the second time information elapse by referring to the timer, the digital broadcast receiver records the reservation recording channel.

By this method, reservation recording can be performed at a start point of the program. Thus, it is possible to record an exact amount of the program.

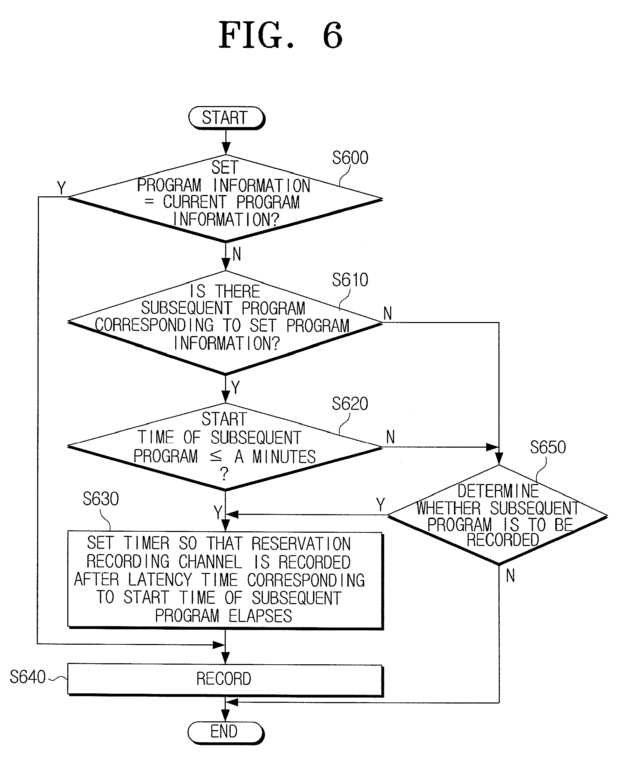

Figure 6 is a flowchart illustrating a method for reservation recording in a digital broadcast receiver according to another exemplary embodiment of the present invention.

Referring to Figure 6, the method for reservation recording in a digital broadcast receiver according to another exemplary embodiment of the present invention includes determining whether set program information is the same as current program information (S600), determining whether there is a subsequent program corresponding to the set program information (S610), determining whether a start time of the subsequent program is within a predetermined time A (S620), setting the timer so that the reservation recording channel is recorded after a latency time corresponding to the start time of the subsequent program elapses (S630), recording a broadcast program received via the reservation recording channel (S640), and determining whether the subsequent program has been recorded (S650).

In operation S600, the digital broadcast receiver determines whether the program information to be reservation-recorded contained in the reservation recording information, i.e., the set program information is the same as the program information currently received from the reservation recording channel, i.e., the current program information. Prior to operation S600, operation S100 shown in Figure 1 must be performed.

This is because the operations of this exemplary embodiment may be selectively combined with the operation shown in Figure 1. However, the operations of this exemplary embodiment may be independent from the operation shown in Figure 1.

That is, the exemplary embodiment of Figure 6 in which only a desired program can be recorded when a broadcast station modifies a broadcast schedule of programs may be selectively combined with the exemplary embodiment of Figure 1 in which reservation recording is performed at the start point of the program.

If it is determined in operation S600 that the set program information is the same as the current program information provided via the reservation recording channel, the process proceeds to operation S640, wherein the currently received broadcast program is recorded.

If it is determined in operation S600 that the set program information is not the same as the currently program information, a determination is made as to whether there is program information corresponding to the set program information (S610).

As such, in operations S600 and S610, the determination is made as to whether the broadcast station modifies the broadcast schedule of programs. In particular, operation S610 is for addressing, for example, problems that the broadcast is delayed by a predetermined time as the current program is a live broadcast program, or that another program is tuned on the reservation recording time due to a difference between the second time information, i.e., the STT values, which differ from broadcast station to broadcast station, as the operation of Figure 1 is not performed.

If it is determined in operation S610 that there is no corresponding subsequent program, the process proceeds to operation S650, where a determination is made as to whether a subsequent program is recorded.

In operation S650, a select menu is displayed on an OSD window of the display area to allow a user to determine whether another program is recorded. In this case, the select menu may provide a message, e.g., "A reserved program is not the same as a current program. Will a subsequent program be recorded?" When the user inputs a command to record the subsequent program in operation S650, the process proceeds to operation S630, and when the user inputs a command not to record the subsequent program, the reservation recordation function is terminated.

When it is determined in operation S610 that there is a subsequent program information corresponding to the set program information, a determination is made in operation S620 as to whether a start time of the subsequent program is within a predetermined time A. When it is determined that the subsequent program is initiated within the predetermined time A, the process proceeds to operation S630, and when it is determined that the subsequent program is not initiated within the predetermined time A, the process proceeds to operation S650, where a user determines whether the subsequent program is recorded. Here, when the start time of the subsequent program is within the predetermined time A, e.g., within several minutes, the subsequent program is determined as the reserved program.

When it is determined in operation S620 that the start time of the subsequent program is within the predetermined time A, the timer is set based on the second time information provided from the reservation recording channel so that the reservation recording channel is recorded after the latency time corresponding to the start time of the subsequent program elapses (S630).

Where the exemplary embodiment of Figure 6 in which only a desired program can be recorded when the broadcast station modifies the broadcast schedule of programs is selectively combined with the exemplary embodiment of Figure 1 in which reservation recording is performed at the start point of the program, the timer preset through the operations of Figure 1 is reset in operation S630.

After the start time of the subsequent program elapses, the digital broadcast receiver records the reservation recording channel (S640). In this case, when the start time of the subsequent program is within several minutes, the subsequent program can be recorded and when the start time of the subsequent program is not with the several minutes, another program which is not a subsequent program can be recorded.

Where the exemplary embodiment of Figure 6 in which only a desired program can be recorded when the broadcast station modifies the broadcast schedule of programs is selectively combined with the exemplary embodiment of Figure 1 in which reservation recording is performed at the start point of the program, after the latency time elapses (S400), a determination may be made as to the received program information is the same as the set program information and then the process may proceed to operation S600.

By this method, even when the broadcast station modifies the broadcast schedule of programs, only a desired program can be recorded by a correct amount on a correct reservation time.

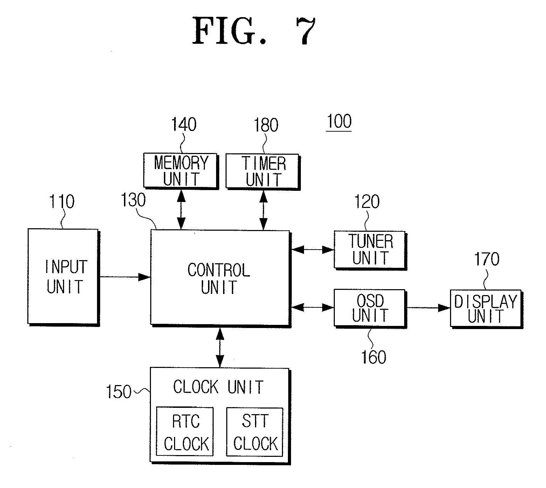

Figure 7 is a schematic block diagram illustrating a reservation recording control unit in a digital broadcast receiver according to an exemplary embodiment of the present invention.

Referring to Figure 7, a reservation recording control unit 100 of a digital broadcast receiver according to an exemplary embodiment of the present invention includes an input unit 110, a tuner unit 120, a control unit 130, a memory unit 140, a clock unit 150, an OSD unit 160, a display unit 170, and a timer unit 180.

The input unit 110 receives a control command and a setup command to control the digital broadcast receiver from a user. The input unit 110 may include a key input unit, an infrared ray (IR) port for receiving an infrared signal from a RCU. When the display unit 170 has a touch screen function, the input unit 110 may include a setup menu for the display unit 170.

In particular, in the reservation recording control unit 100 of a digital broadcast receiver according to an exemplary embodiment of the present invention, the input unit 110 may receive reservation recording information, e.g., first time information that is a reservation recording time, reservation recording channel information, and reservation recording program information from the user using the EPG displayed on the display unit 170.

The tuner unit 120 receives a video signal from a broadcast station, demodulates it, and provides the demodulated video signal to the control unit 130. To this end, the tuner unit 120 includes at least one tuner.

For example, in the case where the digital broadcast receiver tunes one broadcast channel to display on the display area, i.e., the display unit 170, or tunes a reservation recording channel to display on the display unit 170 upon reservation recording, as shown in Figure 2, the tuner unit 120 may include only one tuner.

However, in the case where the receiver tunes one broadcast channel to display on the display unit 170 and, simultaneously, tunes the reservation recording channel to perform the reservation recording function as shown in Figure 3, the tuner unit 120 may include a plurality of tuners.

The control unit 130 controls general operation of the reservation recording control unit in the digital broadcast receiver. The control unit 130 may control general operation of the digital broadcast receiver including the reservation recording control unit 100.

The control unit 130 according to the present invention controls to store the reservation recording information input via the input unit 110 in the memory unit 140, and resets a clock frequency of the STT clock included in the clock unit 150 to a clock frequency corresponding to the third time information, i.e., the STT, provided from a channel currently tuned by the tuner unit 120 for displaying a video on the display unit 170. The control unit 130 also resets the clock frequency of the STT clock using the second time information provided from the reservation recording channel tuned by the tuner unit 120, i.e., the STT of the reservation recording channel.

The control unit 130 compares the second time information with the first time information input via the input unit 110 from the user to obtain a time difference of the first time and the second time, and controls to record a broadcast signal received via the reservation recording channel after a latency time corresponding to the time difference elapses.

In other words, the control unit 130 determines whether the third time information is the same as the first time information. If they are the same, the control unit 130 tunes the reservation recording channel, determines whether the second time information provided from the reservation recording channel is the same as the first time information, and controls to record a broadcast signal received via the reservation recording channel after a latency time corresponding to a difference between the second time information and the first time information elapses.

Upon receipt of the program information to be reservation-recorded via the input unit 110, the control unit 130 determines whether the program information to be reservation-recorded is the same as the program information received via the reservation recording channel.

When it is determined that the program information to be reservation-recorded is not the same as the program information received via the reservation recording channel, the control unit 130 searches one which is the same as the program information to be reservation-recorded among subsequent program information that will be received from the reservation recording channel within a predetermined time, and controls to record a broadcast signal received via the reservation recording channel when the searched program is initiated using the second time information.

The control unit 130 may also receive the program information to be reservation-recorded via the input unit 110, and determine whether the second time information provided from the reservation recording channel is the same as the first time information. And, when the second time information is the same as the first time information, the control unit 130 may determine whether the program information received after a latency time corresponding to a difference between the two times elapses is the same as the program information to be reservation-recorded.

In this case, the control unit 130 may search one that is the same as the program information to be reservation-recorded among subsequent program information that will be received within a predetermined time from the reservation recording channel, and record a broadcast signal received via the reservation recording channel when the searched program is initiated using the second time information.

The memory unit 140 may store a driving program for driving the digital broadcast receiver or the reservation recording control device of the digital broadcast receiver, and store the reservation recording information input via the input unit 110 under control of the control unit 130.

The memory unit 140 may temporarily store the second time information and the third time information for comparison with the first time information, and temporarily store various data which are generated when the digital broadcast receiver or the reservation recording control device of the digital broadcast receiver operates.

The clock unit 150 generates a clock having various frequencies required for the digital broadcast receiver or the reservation recording control device of the digital broadcast receiver under control of the control unit 130. In particular, the clock unit 150 includes the RTC clock for indicating a predetermined time using a clock frequency determined according to a control command received from the user via the input unit 110, and the STT clock for synchronizing the apparatus for reservation recording in the digital broadcast receiver to the channel time, using a clock frequency determined by the STT contained in PSIP information which is received via channels tuned by the tuner unit 120.

The OSD unit 160 creates the setup menu on the OSD window to allow the user to input a setup command for controlling the operation of the digital broadcast receiver or the reservation recording control unit of the digital broadcast receiver, under control of the control unit 130.

In particular, the OSD unit 160 according to the present invention may create an OSD window including a setup menu for allowing the user to determine whether a program broadcast at a set reservation recording time is recorded when there is no program information to be reservation-recorded as the broadcast station modifies the broadcast schedule of programs, as illustrated in Figure 6.

The display unit 170 processes the video signal received via the tuning unit 120 in a graphic manner under control of the control unit 130 to be viewed by the user. To this end, the display unit 170 may be any of various display devices, including cathode ray tube (CRT), liquid crystal display (LCD), and plasma display panel (PDP) televisions.

When the first time information is not the same as the second time information, the timer unit 180 recognizes a latency time corresponding to a difference between the first time information and the second time information using, for example, the internal clock, and outputs a control signal after the latency time elapses so that the control unit 130 performs the reservation recording function.

Alternatively, when the set program information is not the same as the next program information, the timer unit 180 may output a control signal after a latency time corresponding to a start time of another program elapses based on the second time information, so that the control unit 130 performs the reservation recording function.

It will be easily understood from the above description that the reservation recording control unit 100 of a digital broadcast receiver according to the present invention includes only the input unit 110, the tuner unit 120, and the control unit 130, wherein the control unit 130 analyzes the PSIP information input via the tuner unit 120, compares the analyzed PSIP information with the reservation recording information input via the input unit 110, so that the broadcast program is recorded after a predetermined latency time elapses or only a user-desired broadcast program is recorded.

As described above, according to the exemplary embodiments of the present invention, the time information provided from the reservation recording channel is compared with the user-set reservation recording time, and when the time information provided from the reservation recording channel is the same as the user-set reservation recording time, recording is performed. Accordingly, as the recording start time matches the program start time, the program can be recorded by correct amount.

In addition, it is possible to prevent an undesired program from being recorded when the broadcast station modifies broadcast schedule of programs.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A method for recording in a digital broadcast receiver, the method comprising:
(a) setting first time information and channel information for the recording;
(b) comparing second time information provided from a channel corresponding to the channel information with the first time information; and
(c) recording a broadcast program received via the channel based on a latency time corresponding to a time difference between the first time information and the second time information, if the second time information does not correspond to the first time information.

2. The method of claim 1, wherein (b) comprises:
(b1) determining whether a recording time arrives, using the first time information and third time information provided from a currently tuned channel; and
(b2) tuning the receiver to the recording channel, if it is determined that the reservation recording time has arrived.

3. The method of claim 1 or 2, further comprising (d) setting program information to be reservation-recorded.

4. The method of claim 1, 2 or 3, further comprising:
(e) if it is determined that the second time information is the same as the first time information, determining whether the set program information is the same as program information received via the recording channel;
(f) if it is determined that the set program information is not the same as the received program information, searching for program information that is the same as the set program information among subsequent program information that is to be received within a predetermined time from the reservation recording channel; and
(g) if it is determined that program information among the subsequent program information is the same as the set program information, recording a broadcast program received via the recording channel based on the second time information and the determined program information.

5. The method of claim 4, wherein the determined program information comprises a scheduled start time of a program corresponding to the determined program information.

6. The method of claim 1, 2 or 3, further comprising:
(e) determining whether the program information received after the latency time elapses is the same as the set program information;
(f) if the program information received after the latency time elapses is not the same as the set program information, searching for program information that is the same as the set program information among subsequent program information that will be received within a predetermined time from the recording channel; and
(g) if it is determined that program information among the searched the subsequent program information is the same as the set program information, recording a broadcast program received via the recording channel based on the determined program information and the second time information.

7. The method of claim 4 or 6, further comprising: (h) if it is determined that program information searched among the subsequent program information is not the same as the set program information, creating a menu which allows a user to determine whether a subsequent program is recorded.

8. The method of claim 4 or 6, wherein the second time information is a system time table (STT) contained in program and system information protocol (PSIP) provided from the reservation recording channel, and the received program information and subsequent program information is an event information table (EIT) contained in the PSIP.

9. The method of claim 3, wherein the first time information, channel information, and program information to be reservation-recorded are set in an electronic program guide (EPG) containing an event information table (EIT) of a program and system information protocol (PSIP).

10. An apparatus for recording in a digital broadcast receiver, the apparatus comprising:
an input unit arranged to receive first time information and channel information for recording;
a tuner arranged to tune to a recording channel corresponding to the channel information; and
a controller arranged to compare second time information provided from the recording channel with the first time information, and to control recording of a broadcast signal received via the reservation recording channel based on a latency time corresponding to a time difference between the first time information and the second time information.

11. The apparatus of claim 10, further comprising:
a memory unit for storing the first time information and the channel information;
a timer arranged to count the latency time and to provide the latency time to the control unit; and
a clock unit for generating a first clock for indicating a time on the digital broadcast receiver and a second clock for setting the latency time according to the second time information.

12. The apparatus of claim 10, wherein the input unit is further arranged to receive program information to be reservation-recorded.

13. The apparatus of claim 12, wherein the control unit is arranged to determine whether the program information to be reservation-recorded is the same as program information received from the reservation recording channel, if it is determined that the second time information is the same as the first time information.

14. The apparatus of claim 13, wherein the control unit is arranged to searche for program information that is the same as the program information to be reservation-recorded among subsequent program information that will be received within a predetermined time from the reservation recording channel, and to record a broadcast program received via the reservation recording channel based on the second time information and the discovered program information, if the program information to be recorded is different than the program information received from the reservation recording channel.

15. The apparatus of claim 12, wherein the control unit is arranged to searche for program information that is the same as the program information to be reservation-recorded among subsequent program information that will be received within a predetermined time from the reservation recording channel, and to record a broadcast program received via the reservation recording channel based on the searched program information and the second time information, if the program information received after the latency time is not the same as the program information to be reserved recorded.

16. The apparatus of claim 14 or 15, further comprising an on screen display (OSD) unit arranged to create a selection menu which allows a user to determine whether the subsequent program is recorded if the program information to be reservation-recorded is not the same as the subsequent program information.

17. The apparatus of claim 14 or 15, wherein the received program information and subsequent program information is in an event information table (EIT) contained in program and system information protocol (PSIP).

18. The apparatus of claim 14 or 15, wherein the second time information is a system time table (STT) contained in PSIP provided from the reservation recording channel.

19. The apparatus of claim 12, wherein the first time information, channel information, and program information to be reservation-recorded are received based on an electronic program guide (EPG) containing an EIT of PSIP.
